# EUROPÄISCHE PATENTSCHRIFT

(11) **EP 0 939 008 B1**
(45) Veröffentlichungstag und Bekanntmachung des Hinweises auf die Patenterteilung: **09.11.2005**
(21) Anmeldenummer: 98124714.1
(22) Anmeldetag: 19.12.1998
(51) Int. Cl.: B60R 16/00, B60Q 1/14

(54) **Lenkstockschalter für die Schaltstellung beschreibende codierte Schaltsignale**
Steering column switch for the coded signals which describe the switch positions
Commutateur à levier pour les signaux codés décrivant les positions de commutation

(30) Priorität: 28.02.1998 DE 19808547
(43) Veröffentlichungstag der Anmeldung: 01.09.1999
(73) Patentinhaber: Valeo Schalter und Sensoren GmbH, 74321 Bietigheim-Bissingen (DE)
(72) Erfinder: Hecht, Walter, 74321 Bietigheim-Bissingen (DE); Simonis, Karl, 74366 Kirchheim a.N. (DE); Klein, Rudolf, 74348 Lauffen a. N. (DE)
(74) Vertreter: Dreiss, Fuhlendorf, Steimle & Becker

(56) Entgegenhaltungen:
- DE-A- 4 332 748
- DE-C- 4 427 883
- FR-A- 1 385 949
- FR-A- 2 552 583

## Beschreibung

Die Erfindung betrifft einen Lenkstockschalter mit den Merkmalen des Oberbegriffs des Anspruchs 1.

Hierzu wird eine elektronische Einheit benötigt, die mindestens eine Leiterplatte und elektronische Bauelemente umfasst. Benutzt man nur eine einzige Leiterplatte, so benötigt man einen erheblichen mechanischen Aufwand, um die in unterschiedlichen Ebenen stattfindende Bewegung des Schalthebels auf die eine Ebene der Leiterplatte zu übertragen. Derartige mechanische Umlenkmittel sind störungsanfällig und vergleichsweise teuer.

Aus der DE-A-43 32 748 ist ein gattungsgemäßer Schalter für ein Kraftfahrzeug bekannt geworden, der einen Schalthebel aufweist, der mit auf einer Leiterplatte angeordneten Schaltelementen in Wirkverbindung steht. Für eine Abtasteinrichtung eines mit einer Codescheibe versehenen Winkelsensors sind weitere Bauteile erforderlich, die zum einen montiert werden müssen, die miteinander elektrisch verbunden werden müssen und die eventuell Toleranzprobleme aufwerfen.

Aufgabe der Erfindung ist es, einen Lenkstockschalter bereit zu stellen, der einfacher montiert und die einzelnen Bauteile effizienter elektrisch miteinander verbunden werden können und der geringere Probleme hinsichtlich der Toleranz aufweist.

Die Aufgabe wird mit einem Lenkstockschalter gelöst, der die Merkmale des Anspruchs 1 aufweist.

Die Erfindung besteht im Prinzip also darin, die Schaltstellungen der einzelnen Betätigungsglieder in ihrer Betätigungsebene abzutasten und dann über Verbindungsleitungen der gemeinsamen Leiterplatte zuzuführen. Auf diese Weise sind mechanische Umlenkmittel, die die Signale von den einzelnen Betätigungsebenen in die Erstreckungsebene der Leiterplatte übertragen, nicht mehr nötig. Die Bestimmung der Lage kann mit Hilfe einer berührungslosen magnetischen Abtastung geschehen, bei der die Betätigungsglieder mit Magneten versehen sind, welche über zugeordnete Hall-Elemente abgetastet werden. Wird ein bestimmter Zustand durch ein Betätigungsglied erreicht, so spricht das zugeordnete Hall-Element an und es wird von ihm ein elektrisches Signal abgegeben, welches den neu erreichten Zustand des Betätigungsgliedes meldet. Die Stellung der Magnete der einzelnen Betätigungsglieder kann aber auch induktiv abgetastet werden. Weiterhin besteht die Möglichkeit, berührungslos mit Hilfe optischer Einrichtungen die Stellung der Betätigungsglieder und damit die Schalterstellung in den einzelnen Ebenen zu ermitteln.

Erfindungsgemäß kann der Zustand der Betätigungsglieder in deren Betätigungsebene festgestellt werden. Dabei wird der Überwachungsstrom zur Feststellung der Betätigungsgliedlage von der Leiterplatte selbst aus eingespeist, so dass man zu einer zentralen Einspeisung des Überwachungsstromes kommt. Die Leiterplatte ist nun nicht nur mit einer Auswerteeinrichtung, sondern auch mit Mitteln zur Stromausgabe und zur Übertragung des Stromes von Verbindungsleitungen auf die Leitungen der Leiterplatte selbst ausgestattet.

Erfindungsgemäß wird die Abtasteinrichtung, die insbesondere eine optische Abtasteinrichtung eines mit einer Codescheibe versehenen Winkelsensors sein kann, ebenfalls auf der Leiterplatte angeordnet. Auf diese Weise lässt sich durch Auswechseln der Leiterplatte eine Auswertung für unterschiedliche Lenkstockschalter und/oder Lenkwinkelsensoren erreichen.

Durch Auszuwählen unterschiedlich bestückter Leiterplatten lässt sich die Leiterplatte relativ einfach an abgeänderte Lenkstockschalter einzelner Fahrzeugtypen anpassen. Dabei ist es nicht zwingend notwendig, dass der Lenkstockschalter mechanisch geändert aufgebaut ist. Es reicht, dass die Leiterplatte die einzelnen Schalterstellungen in abweichender Weise auswertet, indem einer vorgegebenen Lage eines oder mehrerer Betätigungsglieder eine andere nachgeordnete Funktion als Fahrerwunsch zugeordnet wird.

Eine besonders einfache Lösung ergibt sich durch die Anwendung der Merkmale nach Anspruch 2, in dem die Stellung der Betätigungsglieder durch elektrische Kontakte geschieht. Bei Erreichen einer vorgegebenen Stellung werden also durch die Betätigungsglieder in ihrer Bewegungsebene elektrische Kontakte geschlossen. Das Schließen der Kontakte wird über entsprechend durch den Schalter geführte Verbindungsleitungen der Leiterplatte gemeldet und dort die bekannt gewordenen Zustände zentral ausgewertet. Für die örtlichen Kontakte ergibt sich eine besonders einfache Lösung durch die Merkmale nach Anspruch 3. Es werden also elektrische Federkontakte durch die Betätigungsglieder mechanisch ausgelenkt, sobald diese eine vorher definierte Schalterstellung erreicht haben. Diese Schalterstellung kann durch mit den Betätigungsgliedern verbundene Rasteinrichtungen festgehalten werden. Es kann aber auch genügen, dass die Bedienungsperson einen Schaltvorgang dadurch auslöst, dass sie das Betätigungsglied kurzzeitig in eine bestimmte Schaltlage bringt, in der ein elektrisches Signal an die Leiterplatte abgegeben wird. Nach Auslösung dieses Signals steht für die Auswerteeinrichtung auf der Leiterplatte fest, dass die Bedienungsperson die mit dem betreffenden Betätigungsglied auslösbaren Schaltfunktionen tatsächlich auslösen wollte.

Die Federkontakte können dabei als Unterbrecher einer von der Leiterplatte ausgehenden Stromschleife wirken, so dass durch einen unterbrochenen oder einsetzenden Strom von der Auswerteeinrichtung darauf geschlossen werden kann, dass nunmehr die zur Auslösung der gewünschten nachgeordneten Funktionen notwendige Stellung des Betätigungsgliedes erreicht wurde.

An sich ist es gleichgültig, in welcher Ebene sich die Leiterplatte erstreckt, denn es werden ja die einzelnen Schalterzustände in den betreffenden Betätigungsebenen der Betätigungsglieder abgetastet und dann der Leiterplatte in deren Ebene zugeführt. Einen besonders einfachen Aufbau der Erfindung erhält man allerdings durch Anwendung der Merkmale nach Anspruch 4. Hierdurch werden die der Leiterplatte zugeordneten Enden der Leiter gegenüber der Leiterplatte in der Bewegungsebene des Mitnehmers verschwenkt. Man erhält also für die Leiterbahnenden eine einfach definierte Bewegungsebene. Es ist aber nicht notwendig, dass die Leiterbahnen mit der Mitnehmerebene verschwenkt werden. Die Leiterbahnen können auch in sich flexibel sein und mit ihren Enden mit der Leiterbahn fest und elektrisch leitend verbunden sein. Bildet man aber die zuerst angegebene vorteilhafte Lösung, so empfiehlt es sich in Weiterbildung der Erfindung, die Merkmale nach Anspruch 5 einzusetzen. Es sind hier keine flexiblen Leiterbahnen mehr nötig. Vielmehr können die Leiterbahnen in sich starr sein.

Lenkstockschalter werden, wie ihr Name besagt, an dem Gehäuse des Lenkstocks angeflanscht. Nun gibt es eine ganze Reihe von Baugruppen, die ebenfalls in der Nähe der Lenksäule angebracht sein sollten und welche elektrische Auswerteeinrichtungen benötigen. Dies gilt beispielsweise für Airbags, die Autohupe, Lenkwinkelsensoren. Es empfiehlt sich daher in Weiterbildung der Erfindung die Anwendung der Merkmalskombination nach Anspruch 8. Hierdurch wird es erleichtert, elektrische Überwachungsorgane für andere im Lenkstockbereich liegende Anlagen ebenfalls auf der dem Lenkstockschalter zugeordneten Leiterplatte auszuwerten. Die zur Auswertung eines Lenkwinkelsensors benötigten elektrischen Baugruppen sowie bei einer optischen Abtastung die Abtasteinrichtung selbst benötigen einen vergleichsweise umfangreichen elektrischen Aufbau.

In Weiterbildung der Erfindung ist es besonders zweckmäßig, für den Lenkstockschalter die Merkmalskombination nach Anspruch 9 einzusetzen. Der Eihschub kann dabei parallel zur Ebene der Leiterplatte erfolgen, kann aber auch ggf. senkrecht dazu bewerkstelligt werden. Will man die sehr teuren flexiblen Leiterbahnen vermeiden, so empfiehlt sich in Weiterbildung die Merkmalskombination nach Anspruch 11. Dabei werden die Verbindungsleitungen mit einem starren, vorzugsweise durch den Mitnehmer geführten Rahmen verbunden bzw. mit diesem vergossen. Die starren Leiterbahnen enden dann in Kontakten, die der Leiterplatte als Schleifkontakte zugeordnet sind und in beweglichen Kontaktfedern, mit denen die Stellung der Betätigungsglieder abgetastet wird.

Da die Leiterplatte in der Regel gleichzeitig zur Abgabe eines Überwachungsstroms vorgesehen ist, welcher ggf. durch die Kontaktfedern unterbrochen wird, soll in der Regel die Stromzufuhr unabhängig von der Stellung des Mitnehmers sein, d.h. über den gesamten Weg des Mitnehmers besteht hinsichtlich der Schleifkontakte ein elektrischer Kontakt zur Einspeisung des Überwachungsstroms. In vorteilhafter Weiterbildung empfiehlt es sich allerdings, auch von der Merkmalskombination nach Anspruch 10 Gebrauch zu machen. In diesem Falle werden keine Verbindungsleitungen benötigt, sondern die Federkontakte wirken anstatt auf die Verbindungsleitungen unmittelbar auf entsprechend zugeordnete Kontakte auf der Leiterplatte, wobei die Kontaktgabe von der Winkellage des Mitnehmers abhängt. An sich ist es möglich, alle Verbindungsleitungen innerhalb eines einzigen Rahmens zu vergießen und diesen innerhalb des Schaltergehäuses anzuordnen. Um aber eine erhöhte Flexibilität und vereinfachte Reparatur zu ermöglichen, empfiehlt sich in Weiterbildung der Erfindung die Merkmalskombination nach Anspruch 12 Es können also einzelne Kontaktfedern bei Fehlfunktion ausgewechselt werden. Abgesehen von Reparaturfällen lässt sich auch durch die dort beschriebene Maßnahme eine Änderung der Kontaktlage erreichen, so daß der betroffene Lenkstockschalter an die Bedürfnisse hinsichtlich der einzelnen Fahrzeugtypen leichter angepasst werden kann.

Ein Ausführungsbeispiel der Erfindung wird nachfolgend anhand der Zeichnungen erläutert. Darin zeigt:
Fig. 1 in geschnittener Darstellung eine Seitenansicht eines Einschubmoduls eines Lenkstockschalters
Fig. 2 in teilweise abgeschnittener Draufsicht das Modul nach Fig. 1
Fig. 3 in perspektivischer Ansicht das Modul nach Fig. 1 und 2 und
Fig. 4 die Anordnung der Leiterplatte bei einer Haltevorrichtung zur Aufnahme der Schaltermodule nach Fig. 1 bis 3.

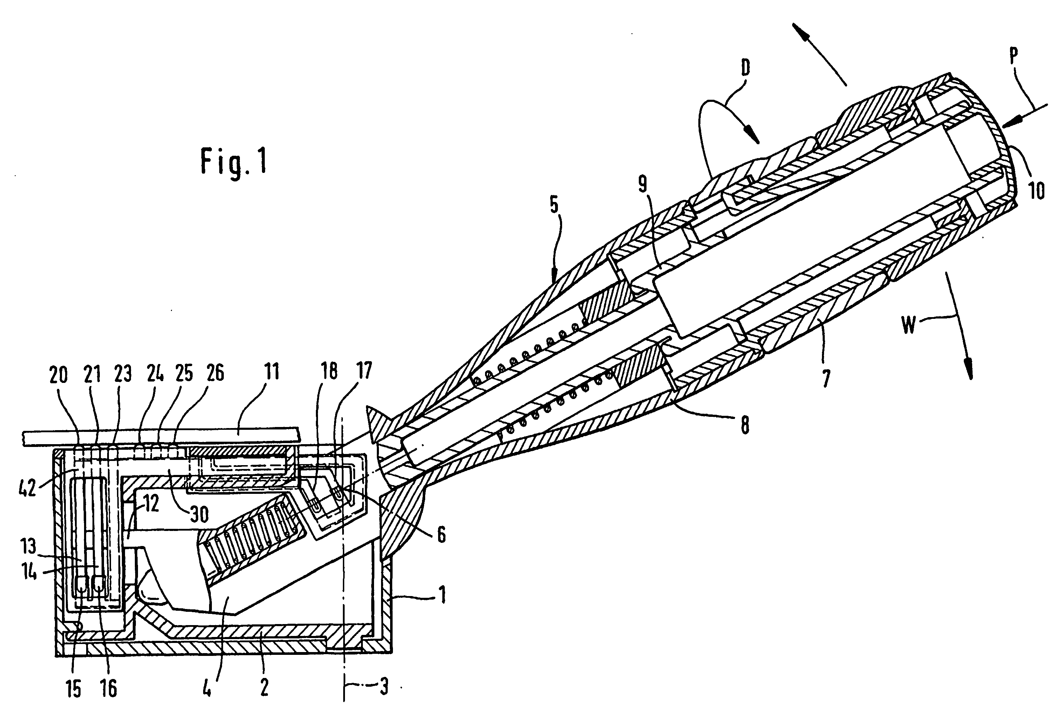

Fig. 1 zeigt ein Gehäuse 1 für einen Lenkstockschalter, in dem ein Mitnehmer 2 um eine Schwenkachse 3 schwenkbar gelagert ist. In den Mitnehmer 2 ragt das Hebelende 4 eines manuell betätigbaren Betätigungshebels 5, welcher um eine Wippachse 6 innerhalb des Mitnehmers gekippt werden kann. Ferner ist der Betätigungshebel 5 noch mit einem Drehring 7 versehen, dessen Drehbewegung über ein hinsichtlich des Hebelgehäuses 8 angeordnetes Betätigungsrohr 9 an eine geeignete Stelle innerhalb des Schaltergehäuses 1 übertragen werden kann. Das Betätigungsrohr 9 endet in einem Druckknopf 10 am Ende des Betätigungshebels 5, über welches das Betätigungsrohr gegenüber dem Hebelgehäuse 8 in Längsrichtung verschoben werden kann. Auch diese Bewegung kann zu einer Kontaktauslösung innerhalb des Schaltergehäuses führen und von der Bedienungsperson des Schalters gewünschte Funktionen auslösen.

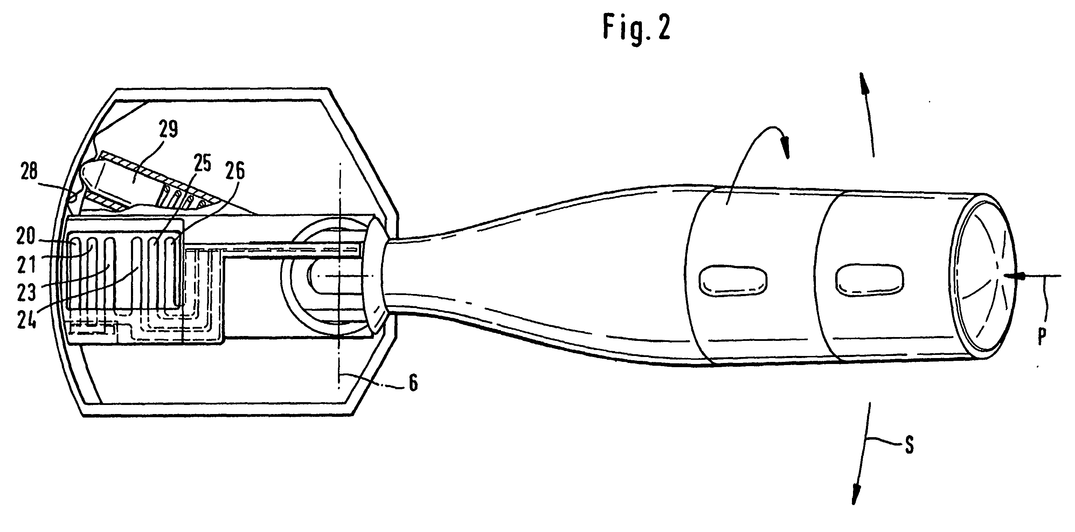

Den einzelnen Bewegungsrichtungen innerhalb der genannten Betätigungsglieder des Betätigungshebels sind somit unterschiedliche Bewegungsebenen zugeordnet, wobei Drehbewegungen ebenfalls als Bewegungsrichtung aufgefaßt werden. Die Wippbewegung verläuft dabei in Richtung des Pfeiles W, die Drehbewegung in Richtung des Pfeiles D, die Druckbewegung in Richtung des Pfeiles P und die Schwenkbewegung in Richtung des Pfeiles S in den Fig. 1 und 2. Für die Erfindung wesentlich ist nun, daß die einzelnen Bewegungen der Betätigungsglieder 7,8,10 zu elektrischen Signalen führen, die auf einer oberhalb des Schaltergehäuses 1 befindlichen Leiterplatte 11 ausgewertet werden. Hierzu wirken die einzelnen Betätigungsglieder mittels entsprechender und diesen zugeordneter Betätigungselemente auf Schaltkontakte ein, wobei deren Zustand dieser Kontakte entsprechende Signale auf die Leiterplatte übertragen werden. Hierzu dienen einzelne Kontaktfedern. Wird beispielsweise als ein erstes Betätigungsglied die Wippbewegung in Pfeilrichtung W um die Wippachse 6 im Mitnehmer 2 betrachtet, so äußert sich eine in Fig. 1 nach unten gerichtete manuelle Wippbewegung in einer entsprechenden Aufwärtsbewegung des Hebelendes 4 im Mitnehmer. Das Hebelende 4 besitzt einen Betätigungsfinger 12, der ebenfalls mit nach oben geht. Dieser Betätigungsfinger als Betätigungselement einer wippenden Betätigungseinrichtung besitzt eine aus der Betrachtungsebene hervorragende keilförmige Fläche, die bei einer Schwenkbewegung nach oben die Federkontakte 13,14 mit ihren freien Enden aus der Betrachtungsebene heraus zum Betrachter hin verschwenkt. Dabei heben die Kontakte von einer nicht näher dargestellten Kontaktbrücke ab, so daß ein über die Federkontakte 13,14 geführte Strom unterbrochen wird. Der Strom wird von dem anderen Ende der Federkontakte 13,14 über-Schleifkontakte Federkontakte 20,21 von der Leiterplatte ein- bzw. ausgespeist. Wird also der beschriebene Strom unterbrochen, so ist auf der Leiterplatte erkennbar, daß der Betätigungshebel 5 eine hinreichend große Schwenkbewegung nach unten durchgeführt hat. Entsprechendes gilt für der Federkontakt 17, die wiederum mit einem ortsfesten Kontakt zusammenwirkt. Wird der Drehring 7 gedreht, so wird ein mit dem Betätigungsrohr 9 verbundener Exzenter innerhalb des Gehäuses 1 wirksam und hebt der Federkontakt 17 von dem zugehörigen ortsfesten Kontakt ab. Auch hier findet wieder eine Stromunterbrechung statt, die über einen zugehörigen Kontakt an der Leiterplatte durch Auswerteeinrichtungen auf der Leiterplatte erkennbar ist. Somit ist auch bei einer Drehbewegung feststellbar, ob diese Drehbewegung soweit durchgeführt wurde, daß eine Stellung erreicht wird, in der die von der Betätigungsperson gewünschte Funktion ausgelöst wird.

Entsprechendes gilt für der Federkontakt 18, die mit einer Rampe auf dem Betätigungsrohr 9 zusammenwirkt, so daß bei einem Eindrücken des Druckknopfes 10 in Richtung des Pfeiles P der Federkontakt 18 ebenfalls von einem zugehörigen ortsfesten Kontakt abgehoben wird. Die daraus resultierende Stromunterbrechung wird ebenfalls als erfolgte Auslösung des Schalters in Druckrichtung auf der Leiterplatte ausgewertet.

Hinsichtlich der Schwenkbewegung des Hebelgehäuses 8 in Richtung des Pfeiles S geschieht entsprechendes. Da bei einer Schwenkbewegung der Mitnehmer 2 durch das auf ihn einwirkende Hebelende 4 um die Achse 3 verschwenkt wird und die einzelnen Schleifkontakte 20 bis 26 mit dem Mitnehmer 2 verschwenkt werden, ergeben sich relativ kurze Wege für die Verbindungsleitungen. Man braucht also nur Schleifbahnen auf der Leiterplatte 11 vorzusehen, die beispielsweise mit den Kontakten 24,25 zusammenwirken, wobei ein über die Schleifbahnen eingespeister Strom unterbrochen wird, sobald die Verschwenkung längs des Winkels S des Mitnehmers so groß geworden ist, daß die Schwenkkontakte 24,25 die nicht dargestellte kreissektorförmige Schleifbahn auf der Leiterplatte verlassen und somit ein Strom über die miteinander verbundenen Kontakte 24,25 nicht mehr übertragen werden kann.

Die Kontakte 20 bis 24 können zur ständigen Stromeinspeisung von der Leiterplatte zu den Verbindungsleitungen und von dort zu den Federkontakten 13 bis 18 dienen.

Den einzelnen Betätigungsgliedern sind somit elektrische Kontakte zugeordnet, deren Auslösung eine Auskunft über die augenblickliche Lage des jeweiligen Betätigungsgliedes gibt. Den einzelnen Stellungen des Betätigungshebels 5 können Raststellungen zugeordnet sein, welche durch Rastausnehmungen 28 in dem Schaltergehäuse 1 definiert sind, in die bei entsprechender Lage des Hebels 5 ein federnder Rastnocken 29 eingreift. Um die Anordnung der Kontaktfedern zu vereinfachen, sind die Verbindungsleitungen zwischen den Schleif-Kontakten 20 bis 26 und den Federkontakten, z.B. 15,16, durch Verbindungsleitungen 42 geführt, die in einem Kunststoffrahmen 30 eingegossen sind. Dieser Rahmen ist daher starr und gegenüber dem Mitnehmer 2 fixiert, so daß die Verbindungsleitungen ebenso wie die Schleifkontakte 20 bis 26 der Schwenkbewegung des Mitnehmers um die Schwenkachse 3 folgen. Innerhalb des Rahmens 30 werden die Verbindungsleitungen geknickt ausgeführt, so daß sie aus der parallel zur Betrachtungsebene liegenden Ebene in Fig. 1 in eine parallel zur Leiterplatte 11 und in Betrachtungsebene von Fig. 2 liegend geführt sind.

Im Rahmen der Erfindung ist es auch möglich, hinsichtlich der Wippbewegung parallel zur Leiterplattenebene liegende nicht dargestellte Kontaktfedern in Fig. 1 nach oben zu verschwenken, so daß sie in Kontakt mit entsprechenden kreissektorförmigen Leiterbahnen treten können. Hiermit könnten dann die Federkontakte 13,14 entfallen.

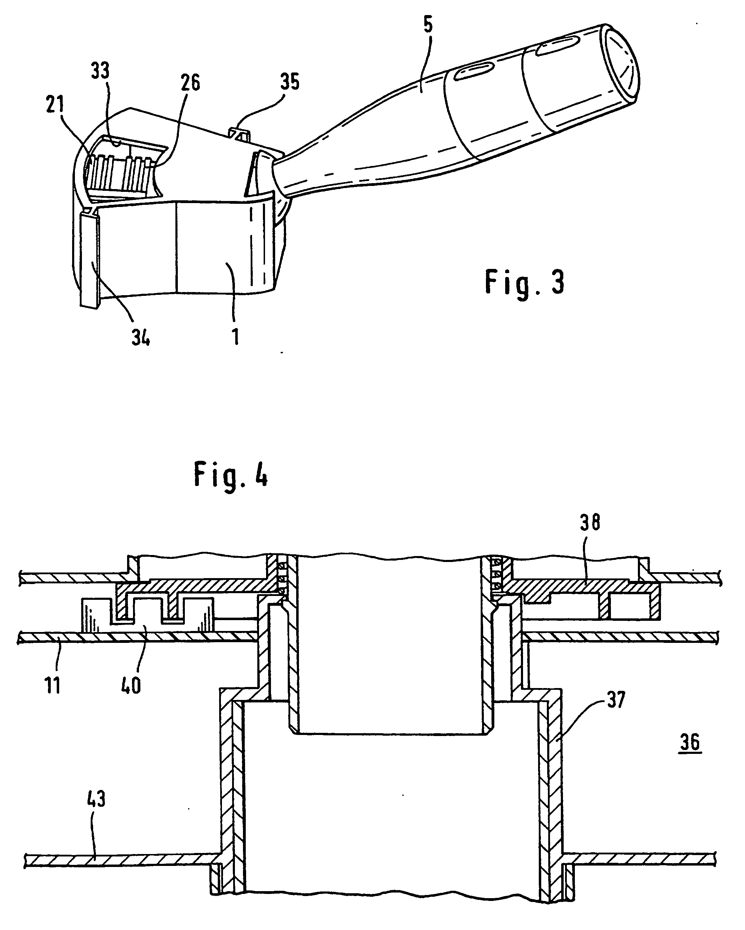

Fig. 3 zeigt eine Ansicht des Lenkstockschalters, bei dem die Schleifkontakte 20 bis 26 durch eine Durchbrechung 33 in dem Schaltergehäuse 1 ragen und auf Schleifbahnen einer nicht dargestellten Leiterplatte einwirken. Das Gehäuse 1 ist mit Führungsansätzen 34,35 versehen, über welche sie in eine Kammer eines Modulhalters am Lenkstockgehäuse eingefügt werden können. Es ist aber auch eine Einschubbewegung des Gehäuses 1 in einer parallel zur Leiterplatte verlaufenden Ebene möglich, beispielsweise in eine in Fig. 4 gezeigte Bucht 36 durch eine zum Lenkstock radiale und/oder tangentiale Verschiebung. Die Bucht wird nach oben begrenzt durch die Leiterplatte 11. Auf der Leiterplatte können nicht dargestellte Auswerteeinrichtungen und elektronische Bauteile befestigt sein. Dabei ist festzuhalten, daß die Leiterplatte auch mit Steckkontakten zum Anschluß eines Datenbusses und zur Übertragung der ermittelten Schaltzustände des Betätigungshebels versehen sein kann. Weiterhin ist die Leiterplatte 11 angrenzend an eine weitere Baugruppe am Lenkstockgehäuse 37 angeordnet, wobei es sich hier um einen optischen Lenkwinkelsensor handelt. Die Codescheibe 38 des Lenkwinkelsensors dreht sich mit dem Lenkstock selber, wobei die Codierung der Codescheibe 38 durch eine optische Abtasteinrichtung 40 ausgewertet werden kann, die ebenfalls auf der Leiterplatte 40 angeordnet ist. Hierdurch wird eine zusätzliche Integration der zu dem Lenkstock gehörenden elektrischen Baugruppen erreicht, wobei auf der Leiterplatte sowohl Zustände des Lenkstockschalters als auch eine Verarbeitung von Lenkwinkelsensorsignalen vorgenommen wird.

## Patentansprüche

1. Lenkstockschalter mit einem Betätigungshebel (5), dessen in unterschiedliche Betätigungsrichtungen (W, P, S; D) betätigbaren Betätigungsgliedern (7, 9, 10) elektrische Kontakte (13 bis 26) zugeordnet sind, deren Zustand von der Stellung der Betätigungsglieder (7, 9, 10) abhängt, wobei innerhalb eines Schaltergehäuses (1) die mechanische Lage der Betätigungsglieder (7, 9, 10) erkannt und über elektrische Verbindungsleitungen der erkannten Lage der Betätigungsglieder (7, 9, 10) zugeordnete Signale auf eine gemeinsame Leiterplatte (11) übertragen werden, wobei auf der Leiterplatte (11) eine Abtasteinrichtung eines Lenkwinkelsensors angeordnet ist, die mit einer Codierscheibe (38) zusammenwirkt, **dadurch gekennzeichnet, dass** eine Auswerteeinrichtung in Abhängigkeit von den festgestellten Kontaktierungen der elektrischen Kontakte (13 bis 26) ein Ausgangssignal abgibt, welches den Zustand der Betätigungsglieder (7, 9, 10) beschreibt.

2. Lenkstockschalter nach Anspruch 1, **dadurch gekennzeichnet, dass** die Bestimmung der mechanischen Lage der Betätigungsglieder (7, 9, 10) mittels elektrischer Kontakte (13 bis 26) geschieht, die abhängig von der Lage der Betätigungsglieder (7, 9, 10) geöffnet bzw. geschlossen werden.

3. Lenkstockschalter nach Anspruch 2, **dadurch gekennzeichnet, dass** die Kontakte (13 bis 18) als elektrische Federkontakte ausgebildet sind, die mit Kontaktbrücken im Sinne einer Kontaktgabe zusammenwirken, wobei die auf die Federkontakte einwirkenden Betätigungsglieder (7, 9, 10) lageabhängig die Federkontakte mit den Kontaktbrücken verbinden bzw. sie von diesen trennen.

4. Lenkstockschalter nach einem der vorhergehenden Ansprüche, **dadurch gekennzeichnet, dass** die Kontakte (13 bis 26) über Verbindungsleitungen, die mit einem im Schaltergehäuse (1) angeordneten Mitnehmer (2) verschwenkbar sind, mit der Leiterplatte (11) verbindbar sind.

5. Lenkstockschalter nach einem der vorhergehenden Ansprüche, **dadurch gekennzeichnet, dass** die Kontakte (20 bis 26) als Schleifkontakte ausgebildet sind und dass deren leiterplattenseitige Enden mit der gegenüber dem Schaltergehäuse (1) fixierten Leiterplatte (11) elektrisch verbunden sind.

6. Lenkstockschalter nach einem der vorhergehenden Ansprüche, **dadurch gekennzeichnet, dass** die Kontakte (13 bis 18) von der Leiterplatte (11) mit Strom versorgt werden, wobei der Stromfluss über die jeweilige Kontaktierung von dem Kontaktzustand der Kontakte (13 bis 18) und damit von der Lage der zugeordneten Betätigungseinrichtungen (7 bis 10) abhängt.

7. Lenkstockschalter nach einem der vorhergehenden Ansprüche, **dadurch gekennzeichnet, dass** die Abtasteinrichtung als optische Abtasteinrichtung eines Lenkwinkelsensors ausgebildet ist.

8. Lenkstockschalter nach einem der vorhergehenden Ansprüche, **dadurch gekennzeichnet, dass** die Leiterplatte (11) in Höhe einer Seite des Schaltergehäuses (1) angeordnet ist, die einer anderen elektrischen Baugruppe, insbesondere einem Lenkwinkelsensor, an einem Lenkstock (37) eines Kraftfahrzeugs zugeordnet ist.

9. Lenkstockschalter nach einem der vorhergehenden Ansprüche, **dadurch gekennzeichnet, dass** er als Einschubmodul ausgebildet ist, welches in eine mit einem Lenkstockgehäuse (37) einer Lenksäule verbundene Halterung (43) einschiebbar ist.

10. Lenkstockschalter nach einem der vorhergehenden Ansprüche, **dadurch gekennzeichnet, dass** die Kontakte (13 bis 26) und deren Verbindungsleitung (42) mit einem Kunststoffrahmen (30) umspritzt sind, aus dem die freien Enden der Kontakte (20 bis 26) als Schleifenenden und die freien Enden der Kontakte (13 bis 18) als Federkontakte hervorstehen.

11. Lenkstockschalter nach einem der vorhergehenden Ansprüche, **dadurch gekennzeichnet, dass** zumindest ein Teil der Kontakte (13 bis 26) in einer im wesentlichen senkrecht zur Leiterplatte (11) stehenden Richtung bewegbar sind.

12. Lenkstockschalter nach einem der vorhergehenden Ansprüche, **dadurch gekennzeichnet, dass** Gruppen oder einzelnen von Kontakten (13 bis 26) einzelnen Kunststoffrahmen (30) zugeordnet sind, die in bewegliche Schalterteile, insbesondere einen Mitnehmer (2) einsteckbar sind.

## Claims

1. Steering column switch having an actuating arm (5) whose actuating members (7, 9, 10), which are able to be actuated in different directions of actuation (W, P, S; D), have assigned to them electrical contacts (13 to 26) whose state depends on the position of the actuating members (7, 9, 10), the physical position of the actuating members (7, 9, 10) being detected inside a switch housing (1) and signals assigned to the positions detected for the actuating members (7, 9, 10) being transmitted to a shared printed-circuit board (11) via electrical connecting conductors, with a scanning means of a steering-angle sensor, which scanning means co-operates with an encoding disc (38), being arranged on the printed-circuit board (11), **characterised in that**, as a function of the contacts which are found to be made at the electrical contacts (13 to 16), an analysing means emits an output signal which defines the state of the actuating members (7, 9, 10).

2. Steering column switch according to claim 1, **characterised in that** the physical position of the actuating members (7, 9, 10) is determined by means of electrical contacts (13 to 26) which are opened or closed as a function of the position of the actuating members.

3. Steering column switch according to claim 2, **characterised in that** the contacts (13 to 18) are in the form of resilient electrical contacts which co-operate with mating contacts for the purpose of contact being made, the actuating members (7, 9, 10) which act on the resilient contacts connecting the resilient contacts to the mating contacts or disconnecting them therefrom as a function of position.

4. Steering column switch according to one of the foregoing claims, **characterised in that** the contacts (13 to 26) can be connected to the printed-circuit board (11) via connecting conductors which can be pivoted by an entraining means (2) arranged in the switch housing (1).

5. Steering column switch according to one of the foregoing claims, **characterised in that** the contacts (20 to 26) are in the form of sliding contacts and **in that** their ends adjacent the printed-circuit board are electrically connected to the printed-circuit board (11), which is fixed relative to the switch housing (1).

6. Steering column switch according to one of the foregoing claims, **characterised in that** the contacts (13 to 18) are supplied with current by the printed-circuit board (11), with the flow of current being dependent, via the contact that is made in the given case, on the contacting state of the contacts (13 to 18) and thus on the position of the actuating means (7 to 10) assigned thereto.

7. Steering column switch according to one of the foregoing claims, **characterised in that** the scanning means is in the form of an optical scanning means of a steering angle sensor.

8. Steering column switch according to one of the foregoing claims, **characterised in that** the printed-circuit board (11) is arranged at the level of a side of the switch housing (1), which side is associated with another electrical sub-assembly, and in particular a steering angle sensor, on a steering column (37) of a motor vehicle.

9. Steering column switch according to one of the foregoing claims, **characterised in that** it is in the form of an insertable module which can be inserted in a mounting (43) connected to a steering column housing (37) on a steering column.

10. Steering column switch according to one of the foregoing claims, **characterised in that** the contacts (13 to 26) and their connecting conductors (42) have injection moulded around them a frame of plastics material (30), from which the free ends of the contacts (20 to 26) project as sliding ends and the free ends of the contacts (13 to 18) project as resilient contacts.

11. Steering column switch according to one of the foregoing claims, **characterised in that** at least some of the contacts (13 to 26) can be moved in a direction substantially perpendicular to the printing circuit board (11).

12. Steering column switch according to one of the foregoing claims, **characterised in that** groups or individual ones of the contacts (13 to 26) have associated with them frames (30) of plastics material which can be inserted in movable switch components, and in particular in an entraining means (2).

## Revendications

1. Commutateur de colonne de direction avec un levier d'actionnement (5), aux éléments d'actionnement (7, 9, 10) - actionnables dans différentes directions d'actionnement (W, P, S, D) - desquels sont affectés des contacts électriques (13 à 26), dont l'état dépend de la position des éléments d'actionnement (7, 9, 10), sachant qu'à l'intérieur d'un boîtier de commutateur (1), la position mécanique des éléments d'actionnement (7, 9, 10) est reconnue et que des signaux affectés à la position reconnue des éléments d'actionnement (7, 9, 10) sont transmis sur une plaque à circuit imprimé (11) commune par des lignes électriques de liaison, sachant que sur la plaque à circuit imprimé (11) est disposé un dispositif de palpage d'un capteur de l'angle de braquage, qui agit ensemble avec un disque de codage (38), **caractérisé en ce qu'**un dispositif d'évaluation délivre un signal de sortie en fonction de la configuration de contact constatée des contacts électriques (13 à 26), lequel signal décrit l'état des éléments d'actionnement (7, 9, 10).

2. Commutateur de colonne de direction selon la revendication 1, **caractérisé en ce que** la détermination de la position mécanique des éléments d'actionnement (7, 8, 10) s'effectue au moyen de contacts électriques (13 à 26), qui sont ouverts, respectivement fermés en fonction de la position des éléments d'actionnement (7, 9, 10).

3. Commutateur de colonne de direction selon la revendication 2, **caractérisé en ce que** les contacts (13 à 18) sont configurés comme contacts électriques à ressort, qui agissent ensemble avec des ponts de contact au sens d'un établissement du contact, sachant que les éléments d'actionnement (7, 9, 10) agissant sur les contacts à ressort relient les contacts à ressort aux ponts de contact, respectivement les coupent de ces derniers en fonction de la position.

4. Commutateur de colonne de direction selon l'une des revendications précédentes, **caractérisé en ce que** les contacts (13 à 26) peuvent être reliés à la plaque à circuit imprimé (11) par des lignes de liaison qui sont pivotantes par un entraîneur (2) disposé dans le boîtier de commutateur (1).

5. Commutateur de colonne de direction selon l'une des revendications précédentes, **caractérisé en ce que** les contacts (20 à 26) sont configurés comme contacts glissants et **en ce que** leurs extrémités côté plaque à circuit imprimé sont reliées électriquement à la plaque à circuit imprimé (11) positionnée par rapport au boîtier de commutateur (1).

6. Commutateur de colonne de direction selon l'une des revendications précédentes, **caractérisé en ce que** les contacts (13 à 18) sont alimentés en courant par la plaque à circuit imprimé (11), sachant que le flux de courant par la configuration de contact respective dépend de l'état de contact des contacts (13 à 18) et ainsi de la position des dispositifs d'actionnement (7 à 10) affectés.

7. Commutateur de colonne de direction selon l'une des revendications précédentes, **caractérisé en ce que** le dispositif de palpage est configuré comme dispositif de palpage optique d'un capteur d'angle de braquage.

8. Commutateur de colonne de direction selon l'une des revendications précédentes, **caractérisé en ce que** la plaque à circuit imprimé (11) est disposée à la hauteur d'un côté du boîtier de commutateur (1) qui est affecté à un autre groupe de construction électrique, en particulier à un capteur d'angle de braquage, sur une colonne de direction (37) d'un véhicule automobile.

9. Commutateur de colonne de direction selon l'une des revendications précédentes, **caractérisé en ce qu'**il est configuré comme module enfichable qui peut être glissé dans un support (43) relié à un boîtier de colonne de direction (37) d'une colonne de direction.

10. Commutateur de colonne de direction selon l'une des revendications précédentes, **caractérisé en ce que** les contacts (13 à 26) et leur ligne de liaison (42) sont enrobés par injection avec un cadre de plastique (30) depuis lequel les extrémités libres des contacts (20 à 26) dépassent comme extrémités de glissement et les extrémités libres des contacts (13 à 18) dépassent comme contacts à ressort.

11. Commutateur de colonne de direction selon l'une des revendications précédentes, **caractérisé en ce qu'**au moins une partie des contacts (13 à 26) sont mobiles dans une direction se trouvant essentiellement perpendiculaire à la plaque à circuit imprimé (11).

12. Commutateur de colonne de direction selon l'une des revendications précédentes, **caractérisé en ce que** des groupes des contacts (13 à 26) ou des contacts isolés sont affectés à différents cadres de plastique (30), qui peuvent être enfichés dans des pièces de commutateur mobiles, en particulier dans un entraîneur (2).
